# EUROPEAN PATENT APPLICATION

(11) **EP 0 707 787 A1**
(43) Date of publication of application: **24.04.1996**
(21) Application number: 94919847.7
(22) Date of filing: 04.07.1994
(51) Int. Cl.: A01G 1/00, A01G 5/06, A01G 9/00

(54) **PLANT GROWTH SUPPORTING BODY, PLANT BODY, AND METHOD OF CULTIVATING PLANT**

(30) Priority: 05.07.1993 JP 192048/93; 15.10.1993 JP 281758/93; 11.04.1994 JP 98066/94
(71) Applicant: KANEBO LTD., Sumida-ku, Tokyo 131 (JP)
(72) Inventor: SUDO, Hiroshi, Odawara-shi, Kanagawa 250 (JP); KOBUCHI, Akemi, Odawara-shi, Kanagawa 250 (JP); NAKAHARA, Michio, Odawara-shi, Kanagawa 250 (JP); OKU, Shosuke, Osaka-shi, Osaka 559 (JP); IGUCHI, Keiji, Urawa-shi, Saitama 336 (JP)
(74) Representative: Schlich, George William
(86) International application number: JP9401085
(87) International publication number: WO9501717

(57) **Abstract**

A plant growth supporting body containing at least one of bactericide, antimold, insecticide and deodorant, and having a coating layer made of air-permeable, water-permeable and noncorrosive material for wrapping substantially occlusively the soil therein. This body does not allow the soil to leak out, prevents the growth of microbes and injurious insects, suppresses the soil smell to give a feeling of cleanness, improves the keeping quality of plants, and is suitable as an ornamental.

## Description

### TECHNICAL FIELD

The present invention relates to a plant culture bag which does not allow the soil to leak out, prevents the breeding of injurious microbes and insects, suppresses the soil smell to give a feeling of cleanliness, improves the keeping quality of plants, and has excellent ornamental qualities.

### BACKGROUND ART

In recent years, services and commodity products intended to bring enjoyment into everyday life have been considered, and moves to beautify living environments with flowers have been increasing at individual and corporation levels along with life westernization. In particular, Western-style flower arrangements using a combination of various flowers is particularly becoming a focus of attention and is gaining a foothold in the decor of offices, stores, and households.

However, a flower arrangement uses cut flowers, so that decorative value is quickly lost when the life-time of cut flowers (about one week) passes.

For the above reason, an arrangement using flowers of potted plants and foliage plants are considered. However, potted plants have fundamental drawbacks such as unattractiveness and uncleanliness caused by bacteria, mold, moss, or algae growing on the surface of pots and soil; indoor contamination with the soil leaking from a fallen pot; generation of various insects from the soil; and generation of soil odor. Therefore, a number of people hesitate to put these types of plants indoors. Thus, potted plants giving a feeling of high cleanliness have been demanded.

Besides pots, bags filled with culture soil for growing seedlings are known. Such bags are intended to grow seedlings and are placed in the soil during main cultivation; therefore, the bags are subject to the same problems as in the case of the potted plants. Furthermore, degradable fibers are used as a cloth material for these bags because their decomposition is desired after placing them in the soil. Thus, the bags cannot remain intact for a long period of time, such as several months of cultivation and enjoyment. The bags also have a drawback of "going bad" giving off unpleasant odor upon decomposition.

Furthermore, potted plants using pots decrease in commodity value by falling over during transportation. This causes serious problems for the mail-order business of potted plants which has been taking root in recent years. Although the soil is prevented from leaking from pots by covering openings of the pots with a vinyl sheet or a sponge sheet, and then binding the sheet with a string, a rubber band, or the like; all of these operations are manually conducted, decreasing operation efficiency, and resulting in increased cost.

### DISCLOSURE OF THE INVENTION

Thus, the objective of the present invention is to provide a plant culture bag which does not allow the soil to leak out, prevents the invasion and the breeding of injurious microbes and insects, suppresses the soil smell to give a feeling of cleanliness, improves the keeping quality of plants, and is suitable as an ornament.

The above-mentioned objectives can be achieved by a plant culture bag containing at least one of bactericide, antimold, insecticide and deodorant, which includes the soil for plants and has a coating layer made of air-permeable, water-permeable and nondegradable material for wrapping substantially occlusively the soil therein; elastic material insertion plant body to be inserted into the plant culture bag, which is partially covered with an elastic material; and a method for cultivating plants characterized in that the coating layer covering the entire soil for plants and having air-permeability, water-permeability and nondegradability is provided with a hole or a slit, and an elastic material portion of the plant body which is partially covered with an elastic material is inserted into the hole or the slit.

Hereinafter, the constitution of the present invention will be described in detail.

As used herein, having air-permeability refers to an air-permeability that is measured to be 2000 kPa·s/m or less by a KES method.

As used herein, having water-permeability refers to moisture permeability that is measured to be 5000 g/m²·24 h or more by a JIS L-1099 A-1 method.

Examples of the material having air-permeability, water-permeability and nondegradability which can be utilized as the coating layer in the present invention include woven fabrics, nonwoven fabrics, earthenware (unglazed), synthetic resins, and films. Among them, woven and nonwoven fabrics are preferred because of their outstanding processability and plant growing ability. Examples of the woven and nonwoven fabrics include polyester, rayon, nylon, acryl, and natural fibers (cotton, silk, wool, hemp, etc.) subjected to antidegradation processing.

In addition, complex materials obtained by combining the above-mentioned materials, e.g., a moisture-permeable film attached to nonwoven fabric, and urethane-coated nonwoven or woven fabrics can be used.

Furthermore, a material not having air-permeability or water-permeability can be used in a part of the coating layer. For example, when a lower part of the coating layer is composed of synthetic resin, glass, metal, or the like, water can be prevented from leaking from the coating layer.

Among these materials for the coating layer, an air-permeable film, nonwoven fabric or woven fabric made of microfibers having a fineness of 0.02 d or less is preferred for the following reasons: Moisture evaporation can be appropriately suppressed while air-permeability is kept; and even when the coating layer is allowed to stand for a long period of time, water hardly leaks from the surface of the plant culture bag, making it difficult to contaminate the interior of rooms. In the case where the coating layer is made of nonwoven and woven fabrics made of microfibers, the external appearance of the coating layer gives an appealing image; for example, even when a portion of the coating layer not covered with a plant becomes visible, there are no worries of an unappealing appearance. In this respect, these materials are also preferred. Furthermore, the nonwoven or woven fabrics made of microfibers have a larger surface area per unit area, compared with conventional nonwoven or woven fabrics having the same weight as that of the fabrics made of microfibers, and an outstanding heat retaining property. Thus, they are capable of maintaining the soil temperature at a high level. Accordingly, when these materials are used, the following advantages are also available: Growth speed is likely to be faster than usual, growth failure is not likely to occur even in a period and a place where night temperature is too low, and therefore, heating expense can be decreased.

The weight of the nonwoven fabric used in the present invention is not particularly limited; however, it is preferably in the range of 100 to 500 g/m², more preferably in the range of 150 to 300 g/m² in terms of strength and rigidity of the culture bag, air-permeability, water-permeability, prevention of leakage of the soil, processability, ease in planting of seedlings, and the like.

In order to provide these materials for the coating layer with moth resistance using bactericide, antimold, and insecticide; drugs such as cuprous oxide, antibacterial zeolite, an aromatic ester, copper citrate, tannic acid (for slugs), pyrethroid compounds permethrin (3-phenoxybenzyl 3-(2,2-dichlorovinyl)-2,2-dimethylcyclopropane carboxylate) (for ants and house centipedes), and diethyltoluamide can be directly sprayed onto these materials or mixed with these materials in the course of production.

These drugs exert great effects when coated onto the coating layer. However, it is preferred that they are mixed with the material of the coating layer, because they can be kept for a long period of time therein.

These drugs can also be mixed with the soil for plants.

In order to provide these materials which can be used for the coating layer with a deodorizing property; zinc oxide, metal phthalocyanine derivatives, and the like can be used in the same way as in the above-mentioned drugs.

The added amount of bactericide, antimold, insecticide, injurious insect repelling material, and deodorant can be appropriately regulated in an ordinary use range. In the case where they are associated with the coating layer, the added amount is preferably in the range of 0.001 to 10%. In the case where they are mixed in the soil, the added amount is preferably 0.001 to 20%.

According to the present invention, the above-mentioned materials can be combined to form the coating layer. For example, nonwoven fabric covering the soil can be partially replaced by synthetic resin.

As the soil for plants filling the plant culture bag of the present invention, generally used soil for plant cultivation can be used. For example, natural culture soil such as red clay, black clay, and peat moss; artificial culture soil such as vermiculite, pearlite, and rock wool; absorptive materials such as water moss and sponges, e.g., polyvinyl formal sponge and polyvinyl acetal sponge; and mixed culture soil of a combination thereof can be used. It is preferred to use lightweight soil, because it is suitable for suspension and movement.

It is preferred that these soils for plants are provided with an antibacterial property in terms of a sanitary aspect. In order to provide the soils for plants with an antibacterial property, for example, powders such as sawdust of conifers (cypresses, cedars), antibacterial zeolite (produced by Kanebo Ltd.), or the like can be mixed in the soil.

The plant culture bag of the present invention includes a coating layer made of a material highly air-permeable; therefore, it is preferred that a plant soil made of a water absorbing material is provided between the culture soil and the coating layer so as to form a water retention layer, or a polymeric water retention agent is uniformly or partially provided in the soil for the purpose of preventing dryness.

The thickness of the water retention layer varies depending upon the size of the plant culture bag and cannot be determined unconditionally. For example, the thickness can be about 1 to 10 mm.

Examples of polymeric water retention agents include a hydrolysate of a starch-acrylonitrile graft polymer, a neutralized substance of a starch-acrylic graft polymer, a saponified substance of an acrylic ester-vinyl acetate copolymer, cross-linked polyvinyl alcohol-modified substances, partially neutralized polyacrylate cross-linked substances, and cross-linked isobutylene-maleic anhydride copolymer. In particular, partially neutralized polyacrylate cross-linked substances are preferred in terms of outstanding water absorption and discharge ability, and mechanical strength. The added amount of the polymeric water retention agent is preferably in the range of 0.05 to 5% by weight.

The plant culture bag of the present invention is preferably mixed with a fragrance. Examples of fragrance to be used include generally used natural perfume, synthetic perfume, and compounded perfume thereof. Various kinds of glycosides, and perfume derivatives such as phosphoric ester derivatives, amino acid derivatives, and carboxylic derivatives are preferred. In particular, various kinds of glycosides are preferred, because they do not give off a scent until they are broken down by an endogenous enzyme (glycosidase or the like) of microbes and plant bodies in the soil; therefore, strong scent does not spread in the course of production of the culture bag to hinder operations, and the culture bag can be provided with natural odor.

Examples of the fragrance include glycoside of alcohols (aliphatic alcohols such as methanol, ethanol, cis-3-hexenol, geraniol, nerol, linalool, citronerol, and falnesol; alicyclic alcohols such as menthol, terpineol, ionol, and hydroxydamascon; aromatic alcohols such as benzyl alcohol, 2-phenylethyl alcohol, and cynnamyl alcohol; phenols such as anise alcohol and vanillyl alcohol) or thiols (methyl mercaptan, ethyl mercaptan, thiolinalool, thiomenthol, etc.) as glycan with monosaccharide, disaccharide, polysaccharide, or reducing sugar; phosphoric esters such as phosphate and pyrophosphate containing alkyl, alkenyl, alkynyl, or aralkyl as a perfume component; amino acid derivatives of cysteine, alanine, or glutamic acid containing alkyl, alkenyl, alkynyl or aralkyl as a perfume component; and derivatives of carboxylic acid, such as quinic acid and caffeic acid, containing the above-mentioned alcohols as a perfume component.

Although the added amount of the fragrance can be appropriately regulated as desired so long as it does not adversely affect the growth of plants, it is preferably in the range of 1 mg to 1 g per 1000 cm³ volume of the culture bag. These fragrances can be directly mixed in the soil; however, it is preferred to mix them in an encapsulated state since scent lasts longer in such a state. Alternatively, they can be allowed to adhere to or become incorporated into the coating layer. In the case of non-heat-resistant or easily modifiable fragrances; it is preferred that the fragrance is micro-capsulated, dispersed in a binder, and allowed to adhere to fibers or mixed in natural resin, petroleum wax, or the like so as to coat fibers forming the coating layer of the culture bag. In the case of heat resistant fragrances such as a phosphate ester; woven or nonwoven fabric is preferably used, which is composed of melt-spinned fibers including the fragrance mixed in polyolefin as a core portion and polyester or the like as a sheath portion.

A plant growth adjustor can be mixed in the plant culture bag of the present invention. As the plant growth adjustor, any adjustors can be used as long as they are generally used for agriculture. For example, auxin (indoleacetic acid, indolebutyric acid, naphthaleneacetic acid, etc.); cytokinin (benzyladenine, kinetin, zeatin, etc.); gibberellin (GA₃, GA₄, GA₇, etc.); and a stunting agent (B-9 (SADH(N-(dimethylamino)succinic acid)), cycocel, thritone (α-cyclopropyl-α(4-methoxyphenyl)-5-pyrimidine methanol, atrinal, bonsai, etc.). Stunting agents are preferred because the size of plants can be controlled in accordance with the culture bag.

Although the added amount of the plant growth adjustor can be appropriately regulated in accordance with the growth state of plants, it is preferably in the range of 1 mg to 10 g per liter of the soil.

These plant growth adjustors can be directly mixed in the soil or mixed therein in an encapsulated state. Alternatively, they can be allowed to adhere to or be incorporated into the coating layer. In the case of non-heat-resistant or easily modifiable plant growth adjustors, it is preferred that the adjustor is micro-capsulated, dispersed in a binder, and allowed to adhere to fibers or adhere to fibers by resin processing in the same way as in the fragrance. In the case of heat-resistant plant growth adjustors, they are preferably incorporated into the coating layer.

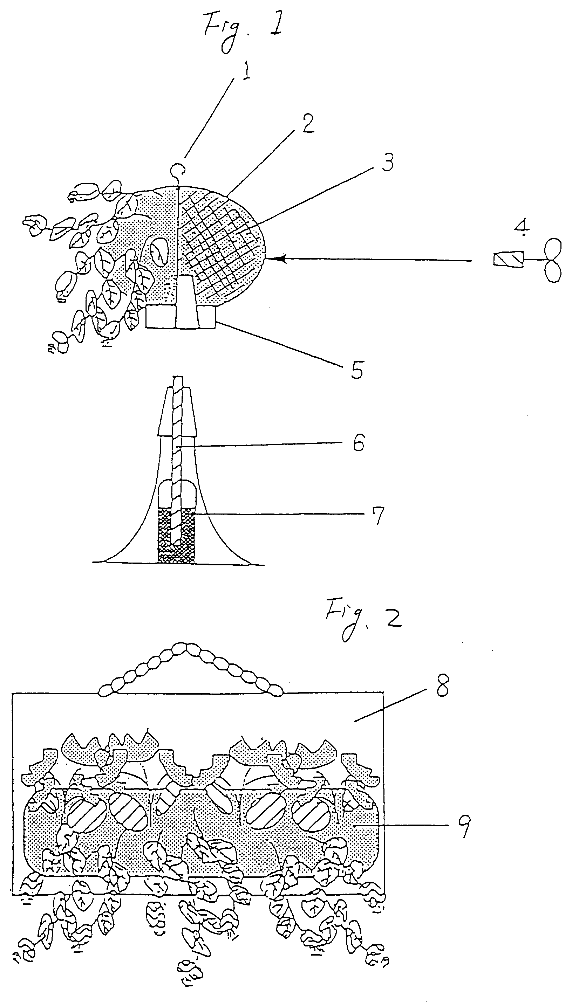

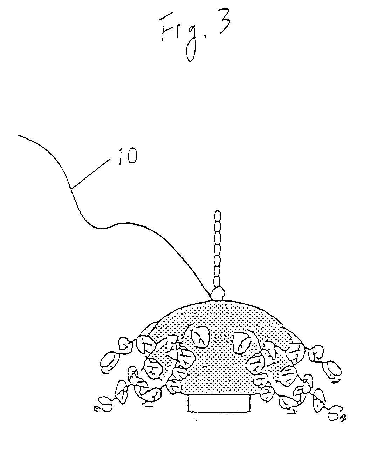

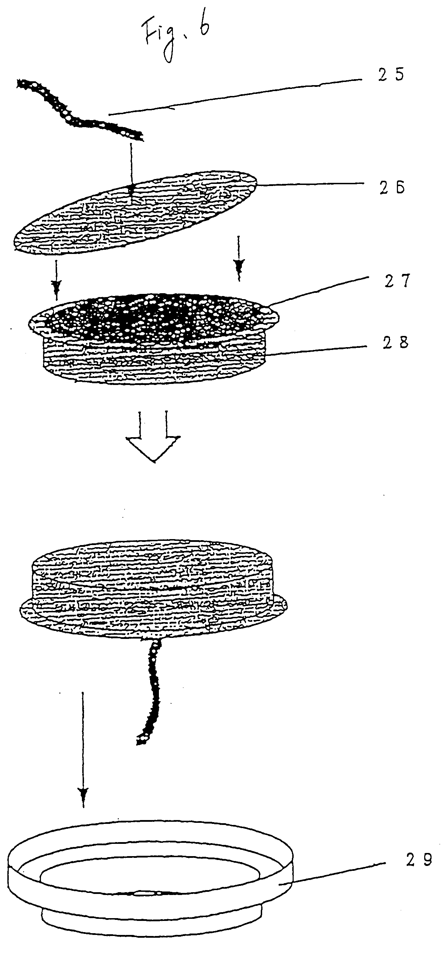

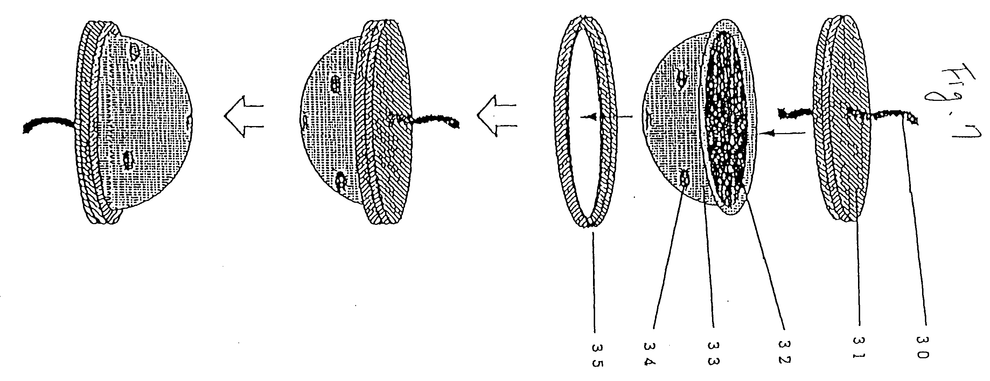

The plant culture bag of the present invention is, for example, in the shape of a ball (Figure **1**), a semicircle (Figure **7**), a triangular pyramid, a cone, a pyramid, a cylinder, a pillow (Figure **2**), a rectangular parallelopiped, a sheet, a plate, a pot, a dish, a column (Figure **6**), or the like. The plant culture bag can have any shape and size as long as it can cover the soil occlusively when completed.

In the case where the coating layer of the present invention is made of nonwoven or woven fabric, the culture bag can be used as it is. The culture bag can be entirely or partially fabricated by heating compression or the like (Figures **6** and **7**). Such fabrication makes it possible to omit the operations such as sewing and tying; therefore, high efficiency and low cost are enabled by mechanization of production.

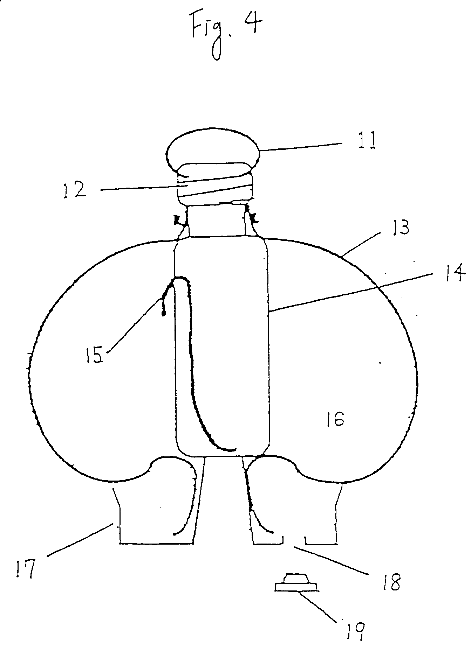

It is preferred that a container for water supply is provided in the plant culture bag of the present invention in terms of the advantage of not detracting from appeal and ease of supplying water. The volume of the container for water supply is preferably in the range of 1/5 to 1/20 of the entire volume of the plant culture bag. Although the material of the container for water supply is not particularly limited, water supply becomes easier when the container is entirely or partially unglazed. In the case where the container is not unglazed, water is supplied to the soil from the container through a water supply string. In the case where excess water leaks out of the lower portion of the culture bag, it is preferred that a water receiver is provided at the lower portion of the culture bag and a water discharge hole is provided in the water receiver (see Figure **4**).

The kind of plants to be used in the present invention is not particularly limited; however, plants generally utilized for an ornamental and enjoyment can be used. Examples of the plants include annual plants such as a petunia, a Marigold, a sunflower, a colius, an impatiens, a morning glory, a babie's-breath, a sweet pea, a pansy, a lobelia, and a forget-me-not; perennial plants such as a pineapple, a geranium, a campanula, a kalancoe, a saintpaulia, a fuchsia, a begonia, a poinsettia, a carnation, a streptocarpus, a gloxinia, an episcia, moss, sage, a thyme, a chive, pepper, a lavender, a rosemary and a basil; bulbous plants such as a cyclamen, an anemone, a crocus, a grape hyacinth, an amaryllis, a calla, a ginger, a caladium, and a snowdrop; flowers and trees such as a hydrangea, a Cape jasmine, a rose, an erica, and a lantana; and foliage plants such as an asparagus, an anthurium, a calathea, a croton, a ficus, a peperomia, and ferns.

Examples of the plant body used in the present invention include seeds, bulbs, and seedlings. These can be used as plug seedlings cultivated in the soil. In order to improve operation efficiency when the plant body is planted in the plant culture bag, a part of the plant body (specifically, a root, a stem, etc.) or an entire body (a seed, a bulb, etc.) is preferably covered with an elastic material described later.

Examples of the elastic material include a foam such as urethane sponge, a fibrous cushion such as polyester cushion, woven fabric, and nonwoven fabric. In order to cover the plant body with these elastic materials, a plug tray is filled with these materials in place of the soil, and seeds are sown thereon so as to produce seedlings or these materials are formed into a sheet and a part of the plant body is wound thereon.

The plant culture bag of the present invention can be planted, for example, as follows:
When the coating layer is made of earthenware, the coating layer is provided with holes of a minimum size required for inserting stems of a plant to be planted. When the coating layer is made of woven fabric or nonwoven fabric, the coating layer is perforated or is provided with slit-shaped openings at an appropriate interval before or after being filled with the soil. Holes or slits can be provided at an appropriate interval depending upon the plant to be planted or for ornamental considerations. They are provided preferably at an interval of 2 to 30 cm. The holes or slits should be formed to have a minimum required size so that the soil does not leak from the inside.

In the case where the coating layer is made of woven or nonwoven fabric, the holes and slits become smaller after the seedlings are planted because of restoring force of the woven or nonwoven fabric, causing the fabric to closely adhere to the stems of the plant so as to prevent the soil from leaking out.

Alternatively, the stem and/or root of the plant to be planted can be covered with an elastic material, such as a sponge and woven or nonwoven fabric, and planted into the plant culture bag. The plant body, covered with the elastic material compressed with a pincette or the like, is planted into the holes or the slits. After the plant body is planted, the elastic material restores to an original configuration, whereby the culture bag is plugged from the inside and the soil is prevented from leaking from the inside.

The plant culture bag of the present invention can be composed of a complex culture bag obtained by connecting a plurality of bodies to each other. The complex culture bag can be produced by inserting a plurality of culture bags into an external frame (a holder for the culture bag) made of plastic, wood, metal, or earthenware so that they are in close contact with each other or fixing culture bags to be in close contact with each other by using a string, a wire, or the like. It is important that the culture bags are connected to each other with respect to air-permeable and water-permeable portions.

The complex culture bag can be designed in various configurations depending upon the room decor or personal taste. Furthermore, since the respective culture bags are connected to each other with respect to air-permeable and water-permeable portions, the complex culture bag has an advantage that water need only be supplied to one of the culture bags. At this time, it is more preferred that the respective culture bags are connected to each other with an external frame or a string with outstanding water-permeability.

In the case of producing the complex culture bag, the coating layer is preferably made of nonwoven fabric.

Water can be sprinkled on the culture bag in which seeds, bulbs, seedlings, or the like are planted by directly giving water to the surface of the culture bag with a watering pot or the like. A dripping water sprinkling method for supplying water through a small hole formed in an appropriate place of the culture bag (Figure **3**) or a bottom face water supply method for supplying water through a water supply string or a water supply pole attached to the bottom of the culture bag (Figure **1**) are effective. In the case of the complex culture bag, only one of the culture bags need be supplied with water. Furthermore, in the case where the culture bag has a container inside for water supply, the container can be periodically supplied with water.

The plant culture bag of the present invention can be placed directly on a floor or a stand. However, it is preferred that the culture bag is suspended from a ceiling or a wall. This is because a plant can grow over the entire face of the culture bag so as to cover it; decorative value increases as a result. Furthermore, when the culture bag in a sheet shape or a plate shape is used, a wall or a ceiling can be decorated with a plant even if the plant used is not a creeping plant such as a Japanese ivy and a pothos.

Although the plant culture bag filled with untreated soil can be used, it can be used after being subjected to heat treatment or chemical treatment for preventing contagious soil disease and exterminating injurious insects.

### BRIEF DESCRIPTION OF THE DRAWINGS

Figure **1** shows a plant culture bag combined with a container equipped with a water supply tank.

Figure **2** shows a plant culture bag set on a wall-mount decorative plate.

Figure **3** shows a hanging type of a plant culture bag with a hook attached on top thereof.

Figure **4** shows a plant culture bag with a water supply container therein.

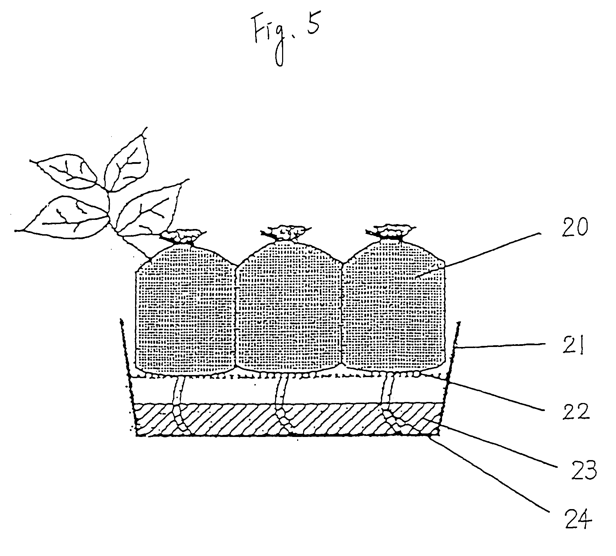

Figure **5** shows a plant complex culture bag.

Figure **6** shows a plant culture bag produced using formed nonwoven fabric.

Figure **7** shows a plant culture bag which is composed of the combination of formed nonwoven fabric, being soft at a portion for planting seedlings, and synthetic resin.

The reference numerals in the figures are as follows:
**1** suspension hook
**2** antibacterial nonwoven cloth
**3** lightweight artificial culture soil
**4** plant body for insertion
**5** plate working as a joint and a water receiver
**6** water supply pole
**7** water tank
**8** wall-mount decorative plate
**9** plant culture bag
**10** water sprinkling tube
**11** handle
**12** lid
**13** coating layer
**14** water supply container
**15** water supply string
**16** culture soil
**17** water receiver
**18** water discharge hole
**19** plug
**20** plant culture bag
**21** culture bag holder
**22** net
**23** water
**24** water supply string
**25** water supply string
**26** disk-shaped heat-compressed nonwoven fabric
**27** culture soil
**28** formed nonwoven fabric
**29** culture bag holder
**30** water supply string
**31** bottom plate made of synthetic resin
**32** culture soil
**33** formed nonwoven fabric
**34** place where seedlings are to be planted
**35** ring for fixing nonwoven fabric made of synthetic resin

### BEST MODE FOR CARRYING OUT THE INVENTION

Hereinafter, the present invention will be described in detail by way of illustrative examples.

### Example 1

Nonwoven fabric (weight: 120 g/m²) made of cis-core type polyethylene·polyester fibers (physical properties: fineness = 13 d, strength = 2.5 g/d, degree of elongation = 132%, heat shrinkage ratio = 2% at 170°C) with cuprous oxide (added ratio: 5%) incorporated therein was used. The nonwoven fabric was filled with 500 g of culture soil containing an equal amount of peat moss, vermiculite, and pearlite and an appropriate amount of a particulate compound fertilizer gradually exerting an effect, thereby producing a spherical culture bag with a radius of 8 cm.

Then, 6 to 10 small holes were formed with a pincette at an interval of 10 to 15 cm on the surface of the culture bag, and impatiens, colius, and achimenes were respectively planted therein. Regarding the impatiens; a seedling with about 3 main leaves growing 3 weeks after sowing was used, and a sponge sheet was wound around the periphery of the stem so as not to allow the culture soil to leak out of the hole, thereby bringing the stem into close contact with the hole of the culture bag. Regarding the colius; a cutting with 2 to 3 leaves was planted. Regarding the achimenes; a bulb was buried through the hole of the culture bag with a pincette so that it sprouted out thereof. The culture bag with those plants planted therein was suspended in a greenhouse, and the plants were cultivated by drip irrigation. Two months later, the culture bag came to be covered with the grown plants and was ready to be used for ornamentation. The plants grew and bloomed and were used as an ornament for about 5 months.

During this time, generation of insects in the culture soil was not observed. The culture bag was disassembled after ornamental use and the culture soil was observed with naked eyes; no insects were observed in the culture soil.

Furthermore, even after a long period of use, the generation of algae and mold were not observed, unlike ordinary cultivation containers.

### Example 2

A culture bag was produced in the same way as in Example 1 except that the weight of the nonwoven fabric was 200 g/m². The culture bag had a rigidity higher than that of Example 1 and was not likely to be deformed.

### Example 3

A culture bag was produced in the same way as in Example 2, except that 100 ml of 0.2% by volume of aqueous solution of β-phenylethyl glucoside which was a glucoside was added and mixed into the culture soil as a fragrance. The culture bag gave off a natural scent, although the scent was stronger than that of Example 2, and enabled plants to have a high decorative value.

### Example 4

A culture bag was produced in the same way as in Example 2, except that 1% by weight of Acrihope (produced by Nippon Shokubai Kagaku Kogyo Co., Ltd.) which was an acrylic polymer was uniformly mixed into the culture soil as a water retention agent. The culture bag had more water retaining ability than that of Example 2.

### Example 5

A culture bag was produced in the same way as in Example 2, except that 100 ml aqueous solution of 0.1% by volume of B-9, which is a growth stunting agent, was mixed into the culture soil as a plant growth adjustor. Impatiens and colius were cultivated in the culture bag. A lush growth in a well-balanced spherical shape resulted without pruning usually required.

### Example 6

Cultivation was performed in the same way as in Example 5 except that B-9 was replaced by cycocel, and poinsettia was used as a plant. The poinsettia grew to 5 cm or less; though this plant normally grows to 30 cm or more in the absence of growth adjustor. Furthermore, the plant grew in a well-balanced spherical shape, thereby increasing the decorative value.

### Example 7

A culture bag was produced in the same way as in Example 2, except that a water supply container as shown in Figure **4** was attached to the inside of the culture bag. The culture bag had an advantage of ease in supplying water.

### Example 8

A plug tray (imported by Nisshin Trading) having 406 holes and generally used for producing plug seedlings, was filled with a urethane sponge (0.015 g/cm³) cut into a rectangular solid of 2 cm x 2 cm x 2.5 cm, and the sponge was soaked with water. Then, seeds of impatiens and colius were sowed on the sponge one at a time to produce a plant body for insertion to be planted into a culture bag. One hundred-fold diluent of a liquid fertilizer (HYPONEX, produced by Hyponex) was sprinkled on the plant body every day for 2 months.

Then, 6 to 10 small holes were formed with a pincette at an interval of 10 to 15 cm on the surface of the culture bag produced in Example 2, and the plant bodies for insertion of impatiens and colius were respectively planted therein. Regarding the impatiens; a seedling with about 5 to 6 main leaves growing 8 weeks after sowing was used. Regarding the colius; a seedling with 4 to 5 main leaves growing was used. These plant bodies were planted by holding and compressing the sponge portion with a pincette and burying the bodies into the holes of the nonwoven fabric. After planting, the sponge returned to its original configuration in the culture bag, thereby preventing the soil from leaking out of the holes of the culture bag. According to this method, planting efficiency considerably improved, compared with the case using a plant body for insertion grown in the soil.

The plant culture bag thus produced was suspended in a greenhouse, and the plants were cultivated by drip irrigation. Two months later, the culture bag was covered with the grown plants, ready to be used as an ornament.

### Example 9

Cultivation was performed in the same way as in Example 2, except that 50 g of sawdust of a cedar was further added and mixed into the culture soil. After two months' cultivation, the plants bloomed and grew and were enjoyed as ornaments for about 5 months.

During this time, the growth of mold was not observed at all on the surface of the culture soil. The culture bag was disassembled after ornamental use and the culture soil was observed with naked eyes; no insects were observed in the culture soil.

### Examples 10, 11

Culture bags were produced in the same way as in Examples 1 and 2, except that the nonwoven fabric made of cis-core type polyethylene·polyester fibers with cuprous oxide (added ratio: 5%) incorporated therein of Examples 1 and 2 were replaced by nonwoven fabric made of polyester fibers with zinc oxide incorporated in a polyester staple (weight: 120 g/m² or 200 g/m², made of 100% polyester staple having physical properties: fineness = 13 d, strength = 2.5 g/d, degree of elongation = 132%, heat shrinkage ratio = 2% at 170°C) (Trade name "Pascal E" produced by Kanebo Ltd.) (Examples 10, 11). Cultivation was performed under the condition that a dwarf rose, pineapple mint which is a kind of herb (flavor grass), and creeping thyme were used as plants.

The above-mentioned alterations did not affect the growth of the plants, and the plants were cultivated and used as ornaments in the same way as in Examples 1 and 2.

In this example, there was almost no soil smell causing a trouble in ordinary cultivation, and the scent of the dwarf rose and the herb was able to be perceived for a long period of time (5 months).

### Example 12

A commercially available flowerpot made of plastic (diameter: 15 cm) was prepared. The flowerpot was filled with the culture soil having a composition which was the same as that of Example 1, and one caladium bulb was planted in the center of the soil. Thereafter, the opening of the flowerpot was covered with the nonwoven fabric of Example 2 which was cut into a round shape having a diameter of 17 cm, the center of which was provided with a slit having a length of 1 cm. The fabric was allowed to completely adhere to the periphery of the flowerpot with an adhesive.

Two weeks after, the bulb started sprouting out and grew satisfactorily thereafter. The generation of algae and mold was not observed on the surface of the nonwoven fabric. Furthermore, even when the flowerpot fell down, the culture soil did not scatter; thus, a potted plant giving a feeling of very high cleanliness was obtained.

### Example 13

Impatiens was cultivated in the same way as in Example 12, except that 250 g of culture soil containing an equal amount of peat moss, vermiculite, and pearlite and an appropriate amount of a particulate compound fertilizer gradually exerting an effect, mixed with 0.5 g of copper citrate which was an agent for avoiding slugs, was used. The impatiens bloomed three months later. During this time, the bottom of the pot was periodically checked; however, no slugs were observed.

### Example 14

A culture bag was produced in the same way as in Example 2 except that 0.1% by weight of pyrethroid compounds permethrin was mixed with the soil.

Then, 5 to 7 small holes were formed with a pincette at an interval of 10 to 15 cm on the surface of the culture bag, and pansy and petunia were planted therein. The plants were cultivated by drip irrigation and bloomed two months later. During this time, no ants were observed in the culture bag and the plants.

### Example 15

A culture bag was produced in the same way as in Example 2, except that pyrethroid compounds permethrin solution was coated onto a polyethylene·polyester nonwoven fabric and the fabric was dried so that 0.1% by weight of pyrethroid compounds permethrin based on the weight of fibers adhered thereto.

Pansy and petunia were planted in the same way as in Example 14 and cultivated by drip irrigation; the plants bloomed two months later. During this time, no ants were observed in the culture bag and the plants.

### Example 16

A culture bag was produced in the same way as in Example 15, except that polyester nonwoven fabric (weight: 120 g/m², made of 100% polyester staple having physical properties: fineness = 13 d, strength = 2.5 g/d, degree of elongation = 132%, heat shrinkage ratio = 2% at 170°C) was used in place of the polyethylene·polyester nonwoven fabric.

Pansy and petunia were planted in the same way as in Example 15 and cultivated by drip irrigation; the plants bloomed two months later. During this time, no ants were observed in the culture bag and the plants.

### Example 17

The polyethylene·polyester nonwoven fabric used in Example 2 was filled with 250 g of culture soil containing an equal amount of peat moss, vermiculite, and pearlite and an appropriate amount of a particulate compound fertilizer gradually exerting an effect, thereby producing three culture bags in a columnar shape with a radius of 5 cm. The respective sides of the three culture bags were attached to each other, and the bodies were fixed with a wire to provide a plant complex culture bag.

Then, 3 to 5 small holes were formed with a pincette at an interval of 5 to 7 cm on the surface of the culture bag, and impatiens, colius, and achimenes were respectively planted in the culture bags. Regarding the impatiens; a seedling with about 3 main leaves developed 3 weeks after sowing was used, and a sponge sheet was wound around the periphery of the stem so as not to allow the culture soil to leak out of the hole, thereby bringing the stem into close contact with the hole of the culture bag. Regarding the colius; a cutting with 2 to 3 leaves was planted. Regarding the achimenes; a bulb was buried through the hole of the culture bag with a pincette so that it sprouted out thereof. The culture bags with these plants planted therein were suspended in a greenhouse, and cultivated by drip irrigation. Two months later, the culture bags were covered with the respective plants grown in a well-balanced manner to be used as ornaments. The plants grew and bloomed and were enjoyed as ornaments for about 5 months.

During this time, the generation of insects in the culture soil was not observed. The culture bags were disassembled after ornamental use and the culture soil was observed with naked eyes; no insects were observed in the culture soil.

### Example 18

Three columnar culture bags produced in the same way as in Example 17 were inserted into an external frame made of metal so as to be in a close contact with each other to construct a plant complex culture bag. Then, 3 to 5 small holes were formed with a pincette at an interval of about 5 cm on the exposed surfaces of the respective culture bags. Impatiens, colius, and achimenes were respectively planted in the culture bags. The plants were cultivated in the same way as in Example 15. Two months later, the culture bags were covered with the respective plants which had grown in a well-balanced manner and were used for ornamentation. The plants grew and bloomed and were enjoyed for about 5 months.

### Example 19

Impatiens and colius were cultivated in the same way as in Example 1, except that a pyrethroid compounds permethrin solution was coated onto a moisture-permeable film (moisture permeability: 7732 g/m·24 h; air permeability: 1020.8 Pa·s/m) produced by attaching a porous polyester film to polyurethane nonwoven fabric (made of polyurethane fibers with a diameter of about 30 microns; weight: 50 g/m²; rupture strength: 400 g/cm²; degree of rupture elongation: 500%) which was coated with the pyrethroid compounds permethrin solution and was dried so that 0.1% by weight of pyrethroid compounds permethrin based on the weight of fibers adhered to the film. The plants bloomed three months later. The amount of leaked water was less than 1 ml/10 h when the culture bag thus obtained was held upside down. The culture bag had two advantages: Water hardly leaks, so that the interior of rooms is not dirtied (in other words, the culture bag can be used without a water receiver) and the culture bag can be produced at relatively low cost.

### Example 20

Impatiens and colius were cultivated in the same way as in Example 1, except that a copper citrate solution was coated onto woven fabric (moisture permeability: 11503 g/m·24 h; air permeability: 27.1 kPa·s/m) produced by using microfibers (fineness: 0.01 d) of nylon·polyester division fibers and dried so that 0.2% by weight of copper citrate based on the weight of fibers adhered to the woven fabric. The plants bloomed three months later. The amount of leaked water was less than 1 ml/10 h when the culture bag thus obtained was held upside down. The culture bag had two advantages: Water hardly leaks, so that the interior of rooms is not dirtied (in other words, the culture bag can be used without a water receiver) and the culture bag has highly decorative appearance.

### Example 21

By heat compression, a nonwoven fabric similar to that of Example 2 was formed into a deep plate with a diameter of 20 cm and a height of 4 cm. The formed nonwoven fabric was filled with 500 g of culture soil similar to that of Example 2, and a non-woven fabric which was heat-compressed into a disk shape was allowed to adhere to the upper face of the deep dish-shaped nonwoven fabric. Furthermore, a small hole was formed in the center of the disk-shaped nonwoven fabric and a water supply string was inserted therein, whereby a culture bag was produced (Figure **6**). Impatiens and colius were cultivated in the same way as in Example 2, except that the culture bag was placed with the water supply string downward. The plants bloomed three months later. The culture bag had an advantage of easy fabrication, high efficiency, and low cost by mechanization of production.

### Example 22

A portion of a nonwoven fabric similar to that of Example 2, other than portions where seedlings are to be planted, was heat-compressed. Thus, the nonwoven fabric formed while the portions where seedlings are to be planted were soft and synthetic resin were combined to produce a plant culture bag (Figure **7**). During heat compression, the portions of the nonwoven fabric where seedlings are to be planted were prevented from being compressed by forming concaves on respective male and female parts. Impatiens and colius were cultivated in the same way as in Example 2, except that the culture bag thus produced was used. The plants bloomed three months later. The culture bag had an advantage in that since the portions of the nonwoven fabric where seedlings are to be planted are soft, seedlings are hardly damaged while being planted or growing.

### INDUSTRIAL APPLICABILITY

According to the present invention, a plant culture bag which does not allow the soil to leak out, is sanitary without any contamination by injurious microbes and insects, and is outstanding as ornamentation. When plants are allowed to grow over the entire surface of the culture bag, the atmosphere of plants growing in a natural environment is given without showing a container. Furthermore, unlike cut flowers, plants with roots can be used, so that vivid plant bodies having an improved keeping quality can be enjoyed.

## Claims

1. A plant culture bag with soil for plants, containing at least one of bactericide, antimold, insecticide and deodorant, and having a coating layer made of a material which is air-permeable, water-permeable and nondegradable for wrapping occlusively the soil therein.

2. A plant culture bag according to claim 1, wherein the bactericide, the antimold, and the insecticide are cuprous oxide, antibacterial zeolite, an aromatic ester, copper citrate, tannic acid, pyrethroid compounds permethrin or diethyltoluamide.

3. A plant culture bag according to claim 1, wherein the deodorant is zinc oxide or metal phthalocyanine derivatives.

4. A plant culture bag according to claim 1, wherein the material which is air-permeable, water-permeable, and nondegradable is woven fabric, nonwoven fabric, earthenware, synthetic resin, a film, polyester, rayon, nylon, acryl, natural fibers subjected to antidegradation processing, a moisture-permeable film attached to nonwoven fabric, urethane-coated nonwoven fabric, or urethane-coated woven fabric.

5. A plant complex culture bag composed of a plurality of connected plant culture bags of either one of claims 1 to 4.

6. An elastic material insertion plant body for insertion into a plant culture bag, a part of which is covered with an elastic material.

7. An elastic material insertion plant body according to claim 6, wherein the elastic material is urethane sponge, a polyester cushion, woven fabric, or nonwoven fabric.

8. An elastic material insertion plant body according to any one of claims 6 and 7, wherein the plant body is a petunia, a Marigold, a sunflower, a colius, an impatiens, a morning glory, a babie's-breath, a sweet pea, a pansy, a lobelia, a forget-me-not, a pineapple, a geranium, a campanula, a kalancoe, a saintpaulia, a fuchsia, a begonia, a poinsettia, a carnation, a streptocarpus, a gloxinia, an episcia, moss, sage, a thyme, a chive, pepper, a lavender, a rosemary, a basil, a cyclamen, an anemone, a crocus, a grape hyacinth, an amaryllis, a calla, a ginger, a caladium, a snowdrop, a hydrangea, a Cape jasmine, a rose, an erica, a lantana, an asparagus, an anthurium, a calathea, a croton, a ficus, a peperomia, or ferns.

9. An elastic material insertion plant body according to any one of claims 6 to 8, wherein parts of the plant body covered with the elastic material are a stem and/or a root of a plant.

10. A method for cultivating plants comprising the steps of: forming a hole or a slit on a coating layer of the plant culture bag of any one of claims 1 to 4 or a coating layer of the plant complex culture bag of claim 5, which covers entire soil for plants; and placing elastic material portions of the elastic material insertion plant body of any one of claims 6 to 9 in the hole or the slit.
